Europäisches Patentamt

European Patent Office

Office européen des brevets

(19)

(11) **EP 0 967 187 B1**

(12) **FASCICULE DE BREVET EUROPEEN**

(45) Date de publication et mention
de la délivrance du brevet:
**02.01.2004 Bulletin 2004/01**

(51) Int Cl.7: **C04B 28/04**, C04B 40/00,
C04B 40/06
// (C04B28/04, 24:16, 24:38),
C04B111:70

(21) Numéro de dépôt: **99401244.1**

(22) Date de dépôt: **21.05.1999**

(54) **Coulis d'injection, ses utilisations, ouvrages le comportant et kit pour sa préparation**

Injektionsschlamm, seine Verwendungen, diese enthaltenden Baute und Kit zu seiner Herstellung

Injection grout, uses thereof, works containing this grout and kit for its preparation

(84) Etats contractants désignés:
**AT BE CH DE DK ES FI FR GB GR IE IT LI LU MC
NL PT SE**

(30) Priorité: **25.05.1998 FR 9806550**

(43) Date de publication de la demande:
**29.12.1999 Bulletin 1999/52**

(73) Titulaires:
• **GTM Construction S.A.
92000 Nanterre (FR)**
• **ORIGNY
75016 Paris (FR)**

(72) Inventeurs:
• **Cussigh, Francois
78250 Mezy sur Seine (FR)**
• **Blin, Benoît
59300 Valenciennes (FR)**
• **Chabert, Alain
92160 Antony (FR)**

(74) Mandataire: **Derambure, Christian
Bouju Derambure Bugnion,
52, rue de Monceau
75008 Paris (FR)**

(56) Documents cités:
**EP-A- 0 612 702        WO-A-96/40598
WO-A-97/22564        FR-A- 2 621 036
US-A- 5 120 367**

• **F. LEA: "The Chemistry of Cement and
Concrete" 1991 , EDWARD ARNOLD , LONDON
XP002113839 * page 370, ligne 30-33 ***

Remarques:
Le dossier contient des informations techniques
présentées postérieurement au dépôt de la
demande et ne figurant pas dans le présent
fascicule.

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 967 187 B1

**Description**

L'invention se rapporte à un coulis d'injection, notamment de précontrainte, ses utilisations ainsi que les ouvrages le comportant.

Elle se rapporte également à un kit destiné à la préparation de ce coulis et à un procédé de vérification de la qualité d'un coulis d'injection.

De nombreux ouvrages ou parties d'ouvrages sont réalisés au moins en partie en béton précontraint et comportent des câbles de précontrainte.

Généralement, ces câbles de précontrainte comprennent plusieurs torons, chaque toron comprenant lui-même plusieurs fils métalliques.

Les câbles de précontrainte sont conventionnellement disposés à l'intérieur d'une gaine, noyée dans l'ouvrage à précontraindre, en utilisant un coulis d'injection de précontrainte.

Les coulis d'injection de précontrainte actuellement connus présentent cependant des inconvénients.

Des contrôles réalisés sur ce type de produit d'injection ont notamment montré que l'homogénéité du coulis n'était pas toujours parfaite.

Ainsi, il a été observé que la masse formant le coulis peut présenter, dans certaines régions, des vides plus ou moins volumineux dus à la formation de bulles.

Il a été également observé que les coulis d'injection subissent des phénomènes de remontée d'eau, encore appelée exsudation, de la région inférieure ou basse du coulis vers la région supérieure ou haute du coulis.

Ces remontées d'eau conduisent à l'apparition de deux phases distinctes : le coulis à proprement parler et une poche d'eau au niveau de la région supérieure du coulis et surmontant ce dernier.

Cette exsudation n'est pas souhaitable.

Certaines parties des torons peuvent en effet ne plus être parfaitement noyées dans la masse du coulis entraînant, en plus d'une fragilisation de la structure, des problèmes de corrosion de l'acier constituant les torons.

L'invention vise à remédier à ces inconvénients, en proposant un coulis d'injection, notamment de précontrainte, dans lequel les phénomènes de remontée d'eau sont empêchés.

On connaît déjà des coulis d'injection présentant une composition optimisée de manière à réduire ou limiter les phénomènes de remontée d'eau.

Le document WO 96/40598 décrit une composition stable hydrocolloïdale utilisée en tant qu'additif stabilisant pour des ciments de forage pétrolier.

La composition décrite par ce document WO 96/40598 comprend un hydrocolloïde uniformément dispersé dans un superplastifiant tel que le naphtalène sulfonaté, la mélamine sulfonatée, le lignosulfate modifié, leurs dérivés et mélanges. Les hydrocolloïdes appropriés sont la gomme welan, l'hyroxi-propylméthyl cellulose, l'hydroxy-éthyl cellulose, l'alcool vinylique, et similaires.

La gomme welan et l'hydrocolloïde sont dans des proportions 1 : 1. Ils sont broyés de manière que la taille des particules soit comprise entre 3 et 500$\mu$m. La suspension liquide ainsi obtenue présente une stabilité relativement bonne et peut être mélangée à des ciments, tels que du ciment Portland. Le mélange obtenu présente alors une perte d'eau inférieure aux mélanges sans hydrocolloïdes, ainsi qu'une stabilité supérieure.

Les propriétés requises pour les coulis d'injection destinés aux puits pétroliers tels que décrits dans le document WO 96/40598 sont très différentes des propriétés requises pour les coulis d'injection pour câbles de précontrainte. En particulier, la résistance mécanique, l'homogénéité, l'absence d'exudation et la stabilité dans le temps des coulis d'injection pour câbles de précontraintes doivent être très élevées.

Les coulis d'injection pétroliers peuvent en effet tolérer des formulations pauvres en ciment (rapport eau/ciment E/C $\approx$ 0,6), totalement inacceptables pour les coulis d'injection utilisés dans le domaine de la précontrainte (E/C nécessairement inférieur à 0,40, voire à 0,32 lorsqu'il n'y a pas d'agent de viscosité).

A cet effet, le coulis d'injection selon l'invention, notamment utilisé en précontrainte, comprend à la base au moins un ciment Portland de type CPA-CEM I, de l'eau, un adjuvant plastifiant et/ou superplastifiant, et un agent de viscosité.

Selon l'invention, le ciment présente une surface spécifique comprise entre 3000 et 3200 cm$^2$/g, et les doses d'adjuvant plastifiant et/ou superplastifiant, d'agent de viscosité et d'eau du coulis sont telles que le coulis d'injection présente, après sa première gélification, un seuil de cisaillement Fann au moins égal à 4 Pa à 20°C, une viscosité Fann au moins égale à 0,3 Pa.s à 20°C, et ne présente pas de trace visible d'exsudation à l'essai au tube incliné après 24 heures.

Les valeurs de seuil de cisaillement et de viscosité mentionnées ci-dessus correspondent à des mesures réalisées en laboratoire, à l'aide d'un viscosimètre Fann, selon les méthodes décrites dans ce qui suit, environ trente minutes après la préparation du coulis, ce temps correspondant généralement au temps nécessaire à la première gélification du coulis.

Le ciment utilisable présente de plus un taux en poids de SO$_3$ total variant entre environ 1,5 % et environ 2,5

%, par rapport au poids total du ciment.

Pour les propriété et caractéristiques générales des ciments de type CPA-CEM I utilisés dans le cadre de l'invention, référence peut être faite à la norme NF P 15 301.

Par exemple, une composition de ciment utilisable dans le cadre de l'invention répond à la composition suivante, exprimée en pourcentage en poids :

$S_iO_2$ :     21,8 ;
$Al_2O_3$ :     3,6 ;
CaO :     64,4 ;
MgO :     1,1 ;
$SO_3$ :     2,2 ;
$Fe_2O_3$ :     4,3 ;

le reste jusqu'à 100 % comprenant des oxydes, notamment de potassium, de sodium, de calcium, des ions chlorures classiques pour ce type de ciment.

Il va de soi cependant que la composition du ciment peut varier dans une large mesure, pour autant que soient respectées les valeurs de surface spécifique et de $SO_3$ indiquées ci-dessus.

Selon une forme de réalisation, le coulis d'injection de l'invention présente un rapport E/C total variant entre environ 0,32 et environ 0,38.

L'adjuvant plastifiant et/ou superplastifiant peut être choisi parmi les produits conventionnellement utilisés.

Par exemple, l'adjuvant plastifiant et/ou superplastifiant peut consister en un produit à base de lignosulfonate, mélamine, naphtalène, polyacrylate, ainsi que les dérivés et/ou mélanges de ces produits.

La quantité totale en poids d'adjuvant plastifiant et/ou superplastifiant utilisée dans le coulis de l'invention varie généralement entre environ 0,5 % et environ 1,5 %, exprimée en pourcentage d'extrait sec par rapport au poids total du ciment.

La quantité en poids d'adjuvant plastifiant peut, quant à elle, varier d'environ 0,02 % à environ 0,2 %, exprimée en pourcentage d'extrait sec par rapport au poids total du ciment.

Des agents de viscosité utilisables dans le cadre de l'invention sont, par exemple, les produits à base de polysaccharide.

Par exemple, l'agent de viscosité peut être à base de gomme xanthane, gomme de guar, gomme curdlan, ainsi que les dérivés et/ou mélanges de ces produits.

Un exemple particulier d'agent de viscosité à base de polysaccharide est la gomme welan, ainsi que ses dérivés.

La gomme welan est un polysaccharide bactérien produit par la souche Alcaligènes ATCC (American Type Culture Collection) n° 31 555 dans un milieu de fermentation pur et en utilisant des hydrates de carbone comme source de carbone.

Le produit est recueilli dans le milieu de fermentation par précipitation avec de l'alcool.

La gomme welan est une gomme comprenant principalement un hétéropolysaccharide contenant les sucres neutres D-glucose, acide D-glucuronique, L-rhamnose et L-mannose et des groupes esters liés par liaison glucosidique.

La structure de ce polysaccharide est décrite notamment dans la publication "Carbohydrate Research", 139, 217-223, 1985.

Sa préparation à partir de la souche bactérienne mentionnée ci-dessus est décrite notamment dans le document US-A-4, 342, 866.

Il va de soi que la gomme welan et/ou ses dérivés peut être mélangée avec d'autres agents de viscosité, tels que ceux décrits précédemment.

Le ou les agents de viscosité à base de polysaccharide sont présents en une quantité en poids variant entre environ 0,005 % et environ 0,05 %, par rapport au poids total du ciment.

D'autres produits utilisables comme agent de viscosité comprennent les produits à base de cellulose, notamment méthyl-cellulose, hydroxy-éthyl-cellulose, ainsi que les mélanges ec/ou dérivés de ces produits.

Le ou les agents de viscosité à base de cellulose sont présents en une quantité en poids variant entre environ 0,02 % et environ 0,5 %, par rapport au poids total du ciment.

Il va de soi que l'agent de viscosité ajouté peut comprendre un mélange de produits à base de polysaccharide et de produits à base de cellulose.

L'invention vise également les utilisations du coulis d'injection tel qu'il vient d'être décrit.

Le coulis d'injection de l'invention est particulièrement adapté pour le remplissage de cavités ménagées dans des structures telles que bâtiments, ouvrages d'art, nécessitant un remplissage précis et une résistance mécanique élevée.

Le coulis d'injection de l'invention peut, par exemple, être utilisé avec ou à la place de mortier de scellement, ou comme coulis de précontrainte.

L'invention vise également à protéger un kit, destiné à la préparation d'un coulis d'injection, pour le remplissage de cavités, par exemple, de gaines de précontrainte.

Le kit selon l'invention comprend une première dose prédéfinie d'un ciment tel que décrit dans ce qui précède et une seconde dose prédéfinie d'un mélange d'au moins un adjuvant plastifiant et/ou superplastifiant et d'au moins un agent de viscosité tels que décrits précédemment, le poids de la seconde dose étant adapté pour une utilisation avec la première dose.

A titre d'exemple, la dose de ciment peut être d'environ 50 kg tandis que la dose du mélange d'au moins un adjuvant plastifiant et/ou superplastifiant et d'au moins un agent de viscosité peut varier entre environ 0,25 kg et environ 0,8 kg.

Selon une forme de réalisation, la seconde dose renfermant le mélange d'au moins un adjuvant plastifiant et/ou superplastifiant et d'au moins un agent de viscosité est conditionnée, par exemple dans une enveloppe, telle qu'un sachet hydrosoluble, et la première dose renfermant le ciment est conditionnée dans une enveloppe séparée de la seconde dose.

Ainsi l'utilisateur n'a plus, au moment de l'utilisation du coulis, qu'à mélanger les doses contenues dans les deux enveloppes et à ajouter la quantité d'eau nécessaire pour obtenir un coulis présentant les caractéristiques recherchées.

L'invention vise également à protéger les structures, telles que bâtiments, tunnels, ponts, plus généralement ouvrages d'art, réalisés au moins en partie en béton précontraint et comportant des câbles de précontrainte, ces structures comportant au moins dans certaines de leurs parties, au moins un coulis d'injection tel que décrit dans ce qui précède.

L'invention vise également à protéger un procédé de vérification de la qualité d'un coulis d'injection.

Le procédé de vérification de la qualité d'un coulis d'injection, notamment de précontrainte, au regard des phénomènes d'exsudation, comprend des étapes consistant à :

- mesurer le seuil de cisaillement Fann, après première gélification du coulis ;
- mesurer la viscosité Fann, après première gélification du coulis.

Selon l'invention, la stabilité du coulis est évaluée sur tube incliné, et la viscosité et le seuil de cisaillement sont ensuite calculés selon les modes opératoires décrits dans ce qui suit.

L'invention sera mieux comprise dans la description qui suit, faite en référence aux figures annexées.

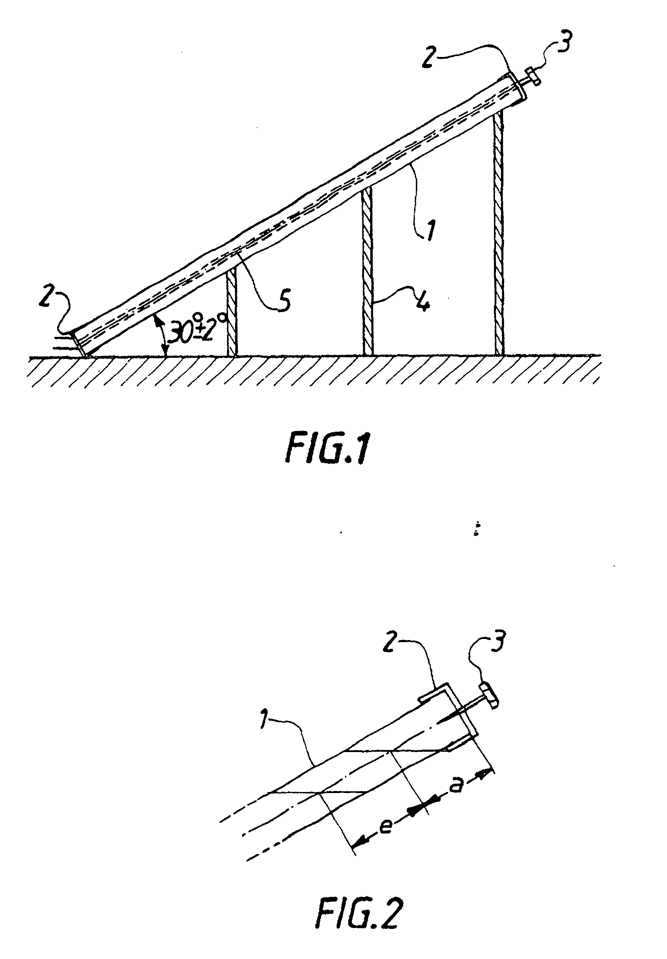

La figure 1 représente une vue schématique de côté, en coupe longitudinale, d'un tube incliné utilisé dans les essais de stabilité.

La figure 2 représente une vue schématique de côté, en coupe longitudinale, de la partie supérieure du tube incliné de la figure 1.

Différents coulis d'injection sont préparés de façon conventionnelle, pour mesurer leur stabilité.

Ces coulis sont préparés en faisant varier le rapport E/C total ainsi que, le cas échéant, la quantité d'agent de viscosité ajoutée.

Le ciment utilisé est à la base un ciment CPA-CEM I possédant la composition suivante, exprimée en pourcentage en poids :

| | |
|---|---|
| $S_iO_2$ : | 21,8 ; |
| $Al_2O_3$ : | 3,6 ; |
| $Fe_2O_3$ : | 4,3 ; |
| CaO : | 64,4 ; |
| MgO : | 1,1 ; |
| $SO_3$ : | 2,2 ; |
| $K_2O$ : | 0,60 ; |
| $Na_2O$ : | 0,15 ; |
| $Cl^-$ : | 0,01 ; |
| $CO_2$ : | 0,4 ; |
| CaO libre : | 1,4 ; |
| alcalins équivalents libres : | 0,55. |

Le ciment utilisé, sous forme de poudre, possède une surface spécifique de 3 100 $cm^2$/g et une masse volumique de 3,20 g/$cm^3$.

A ce ciment sont ajoutés un agent de viscosité (A.V.) consistant en de la gomme welan, et de l'eau en proportion suffisante pour obtenir un coulis présentant une fluidité satisfaisante pour l'injection.

L'agent de viscosité est ajouté à des doses de 0,005 %, 0,0075 %, 0,01 % et 0,02 % en poids par rapport au poids du ciment.

A titre de témoin, le ciment sans ajout d'agent de viscosité est également testé.

Le coulis est fluidifié avec un superplastifiant de type naphtalène commercialisé sous la dénomination RESIFLOW NP2, par la société CONDAT INDUSTRIE ADJUVANTS (France).

L'agent superplastifiant est ajouté à une dose en poids de 0,8 %, exprimée en pourcentage d'extrait sec par rapport au poids total du ciment.

Les essais sont réalisés selon le protocole décrit en annexe I, en utilisant un viscosimètre Rhéomat 115 A (société BAROID, France).

Les résultats obtenus apparaissent sur le tableau I figurant en annexe II.

En laboratoire, l'agent stabilisant A.V. est testé aux températures de 5°C, 10°C et 20°C et à des rapports E/C totaux de 0,34 et 0,38.

La fluidité Marsh est suivie aux trois températures de 5°C, 10°C et 20°C.

En parallèle, la viscosité, le seuil de cisaillement et la thixotropie sont mesurés à l'aide du viscosimètre Rhéomat sur 2 heures de temps. Un filtre-presse Baroid est également utilisé pour apprécier l'essorage du coulis sous une pression de 500 kPa.

Les essais montrent que le coulis ne comportant pas d'agent de viscosité présente un bon comportement rhéologique et une bonne stabilité à 5°C. A 10°C, le seuil de cisaillement diminue et la vitesse d'essorage augmente. Le phénomène s'accentue nettement à 20°C mettant en cause la stabilité du coulis.

Le stabilisant (A.V.) dosé à 0,005 % permet à la fois de maintenir un seuil de cisaillement élevé et d'obtenir une bonne rétention d'eau dans le coulis. Cependant, la viscosité du coulis est encore dans ce cas influencée par la température. Un E/C relevé à 0,38 permet d'augmenter le dosage à 0,02 % de A.V. pour une fluidité équivalente.

Dans ces conditions, le coulis devient moins sensible aux variations de température en conservant les bonnes caractéristiques rhéologiques suivantes : viscosité et seuil de cisaillement suffisants pour une pompabilité et une stabilité correctes du coulis ; essorage très lent sous 500 kPa du coulis permettant d'éviter le phénomène de filtration du coulis.

Des tests de stabilité sont également réalisés sur tube incliné, selon la procédure décrite ci-après.

Dans les tests sur tube incliné, les coulis utilisés présentent des rapports E/C totaux de 0,31, 0,32, 0,34, 0,35, 0,36 et 0,37, avec des quantités en poids d'agent de viscosité (A.V.) ajouté variant de 0 %, 0,005 % et 0,02 %, exprimées en pourcentage par rapport au poids du ciment.

Les tests sur tube incliné ont pour objet de caractériser en vraie grandeur l'exsudation et la stabilité du coulis, en tenant compte de l'effet de filtre dû à la présence des torons.

Ils permettent également de vérifier la validité des méthodes de fabrication et d'injection, en particulier le délai proposé entre la fin de la première injection et le début de la reprise d'injection.

L'essai consiste, dans une première phase, à mesurer la quantité d'eau ressuée et la quantité d'air accumulée à la surface d'un coulis de liant hydraulique injecté sous pression dans un conduit transparent, laissé au repos et à l'abri de toute évaporation.

Dans une seconde phase, obligatoire sauf si elle est contre-indiquée par la procédure d'injection, une reprise d'injection du coulis est réalisée et les quantités d'eau et d'air sont mesurées une nouvelle fois.

Les essais sont réalisés avec deux tubes 1 en chlorure de polyvinyle transparent d'un diamètre intérieur de 81 mm ± 2 mm et d'une longueur de 5 m, munis de bouchons 2 à chaque extrémité, d'une vanne d'arrêt à la partie inférieure et d'une vis de purge 3 à la partie supérieure.

Ces tubes, qui doivent résister à une pression intérieure d'au moins 1 MPa sont posés sur des supports 4 de façon à posséder une inclinaison de 30° ± 2°, l'inclinaison correspondant à une dénivellation d'une hauteur de 2,50 m.

Le matériel de malaxage et le dispositif d'injection, avec manomètre de contrôle de pression, sont ceux prévus dans la méthode de fabrication.

Les deux tubes transparents 1 sont fixés sur leurs supports 4 de façon à ce qu'ils ne présentent pas de flèche notable et qu'ils soient inclinés de 30° ± 2° par rapport à l'horizontale. Douze torons 5 sont enfilés dans chacun des tubes 1. Les bouchons sont ensuite fixés sur les tubes par collage, pour obturer les extrémités.

Les coulis à tester sont préparés en respectant les formulations ci-dessus. A la fin du malaxage, un échantillon de coulis est prélevé, afin de vérifier que la fluidité prescrite est bien atteinte.

Ce contrôle est réalisé à l'aide d'un cône de Marsh selon la norme NF P18-358.

Un coulis est injecté à la partie basse du premier tube 1 après ouverture de la vis de purge 3 . Quand le coulis sort à la partie supérieure du tube 1, avec la même consistance qu'à l'entrée, la vis de purge 3 est fermée et la pression d'injection est maintenue pendant la durée prévue par la méthode d'injection. Un robinet situé en partie inférieure du tube 1 est alors fermé et l'opération d'injection est considérée comme terminée.

Les volumes d'air a, d'eau e et éventuellement de substance liquide surnageant au-dessus du coulis de ciment à la partie supérieure du tube 1 sont mesurés.

Cette substance liquide éventuellement formée se distingue du coulis de ciment proprement dit par une couleur blanchâtre et jaunâtre, généralement plus claire que celle du coulis.

Les mesures de volumes sont effectuées à des échéances devant coïncider avec le moment de la reprise d'injection, l'une des échéances devant coïncider avec le moment de la reprise d'injection du deuxième tube.

A titre indicatif, les mesures peuvent être faites à 30 minutes, 1 heure, 2 heures et 24 heures après la fin de l'injection.

Injection du second tube (dit de reprise d'injection).

Pour éliminer l'eau apparaissant éventuellement par exsudation à la partie supérieure des tubes inclinés 1, un volume de coulis équivalent au volume d'eau exsudée est réinjecté dans les tubes inclinés 1.

Un processus d'injection identique à celui utilisé pour injecter le premier tube est dans ce cas employé pour injecter le second tube, les deux tubes étant injectés de façon quasi-simultanée.

Au bout d'une période de temps définie et comptée à partir de la fin de la première injection, le malaxage du coulis restant dans la cuve du malaxeur est repris. Une nouvelle mesure de la fluidité du coulis est effectuée.

La vis de purge 3 et le robinet du second tube 1 sont réouverts et une reprise d'injection a lieu. Elle permet d'évacuer les substances liquides qui ont pu s'accumuler en partie haute du second tube 1 et de remplir le second tube 1 avec du coulis, de la manière la plus complète possible. Quand le coulis sort à la partie supérieure du second tube 1, la vis de purge 3 est fermée et la pression de réinjection est maintenue pendant la durée prescrite. Un robinet situé en partie inférieure du second tube 1 est alors fermé et l'opération de reprise d'injection est considérée comme achevée.

La durée entre la première injection et la reprise d'injection, classiquement comprise encre 30 minutes et 2 heures et le temps de remalaxage, sont définis par la méthode d'injection à valider.

Comme pour le premier tube 1, les mesures de volumes sont effectuées à des échéances comprises entre 0 heure et 24 heures après la fin de la première injection ; en particulier, elles ont lieu juste avant la reprise d'injection, puis 30 minutes, 1 heure et 2 heures après la fin de la reprise d'injection.

Les valeurs de viscosité et de seuil de cisaillement sont mesurées à l'aide d'un viscosimètre Fann, modèle 35, disponible commercialement auprès de la société BAROID. Cet appareil permet de mettre en évidence l'éventuelle présence de thixotropie.

Le viscosimètre Fann est un viscosimètre rotatif à régime permanent à deux cylindres coaxiaux. Il fonctionne en gradient de vitesse imposée, c'est-à-dire qu'un moteur communique au cylindre externe ou rotor une vitesse angulaire constante. L'autre cylindre ou stator reste immobile, le produit étant soumis à un mouvement laminaire de cisaillement.

Le couple de forces résistantes qu'il faut appliquer au cylindre interne pour qu'il reste immobile est mesuré, en fonction des équations suivantes.

Viscosité apparente

$$n = Í/D = \frac{F/A}{dV/dL} \qquad \text{(en Pa.s)}$$

avec

D :    gradient de vitesse en s-l, tel que $D = \frac{dV}{dL}$,

Í :    contrainte de cisaillement en Pa, telle que $= \frac{F}{A}$,

F :    force résistante qui maintient entre deux plans parallèles séparés de la distance dL la différence de vitesse dV,

A :    surface des deux plans.

<u>Thixotropie</u>

Un fluide est dit thixotrope lorsque sa viscosité apparente, à un gradient de vitesse constant, diminue en fonction du temps de cisaillement, à condition que ce phénomène soit réversible, avec retour à la structure initiale après un temps de repos suffisant.

<u>Seuil de cisaillement</u>

C'est la contrainte de cisaillement minimale qu'il faut appliquer sur le fluide pour le mettre en mouvement (à D= 0) . Elle s'exprime en Pa.

Dans le cas du viscosimètre Fann, le gradient de vitesse est fixé par le choix de la vitesse de rotation. La contrainte de cisaillement est déduite de la lecture de la déviation de l'aiguille dans un cadran gradué situé sur le dessus de l'appareil.

Cette aiguille est reliée au stator par un ressort pour la mesure du couple de forces résistantes F.

Le viscosimètre Fann coaxial utilisé comporte six vitesses de rotation (600, 300, 200, 100, 6 et 3 T/min.).

Les essais sont réalisés comme suit :

- le stator est fixé sur sa tige de soutien solidaire du cylindre de soutien.

- le point gravé sur le cylindre de soutien et l'encoche du rotor sont placés en concordance. Le rotor est ensuite glissé vers le haut jusqu'à ce que les deux autres encoches (circulaires) ne soient plus visibles. Le rotor est ensuite pivoté vers la droite en maintenant fixe le cylindre de soutien.

250 ml de coulis sont alors introduits dans le godet, jusqu'au trait repère intérieur.

- le godet est ensuite placé sur un socle de réception et est bloqué en faisant concorder les pieds du godet et les encoches du socle.

- le socle est ensuite levé jusqu'à ce que la surface du coulis couvre le trait repère du rotor, puis est bloqué à l'aide d'une molette de blocage.

- la vitesse du viscosimètre est placée en position intermédiaire 0 (pas d'entraînement du rotor).

- l'appareil est branché puis la vitesse est amenée à une valeur de 6T/min en déclenchant rapidement le chronomètre.

- au bout d'une minute de rotation, la déviation de l'aiguille est lue et notée sur le cadran de l'appareil ($\theta$ 6).

- le chronomètre est arrêté et remis à 0, tout en positionnant la vitesse à 3 T/min. Le chronomètre est de nouveau rapidement déclenché.

- après vingt secondes de rotation, la nouvelle déviation de l'aiguille est lue et notée ($\theta$ 3).

- les viscosité et seuil de cisaillement Bingham sont calculés à partir des formules ci-dessous :

$$Vp = 0,1 \; (\theta\, 6 - \theta\, 3) \text{ en Pa.s,}$$

$$Yv = 0,479 \; (2\, \theta\, 3 - \theta\, 6) \text{ en Pa.}$$

Les essais réalisés avec le coulis conforme à l'invention n'ont pas nécessité de reprise d'injection.

Les résultats obtenus sur tube incliné sont donnés dans le tableau II figurant en annexe III.

ANNEXE I

| PROTOCOLE DES ESSAIS DE VISCOSITE | | | |
|---|---|---|---|
| | PAS 1 | PAS 2 | PAS 3 |
| - Sensibilité | 1,0 | 1,0 | 0,0 |
| - Gradient de vitesse minimum 1 (s$^{-1}$) | 0,050 | 0,050 | 0,00 |
| - Temps en gradient de vitesse minimum (s) | 180,0 | 10,0 | 0,0 |
| - Temps en montée (s) | 60,0 | 30,0 | 0,0 |
| - Gradient de vitesse maximum (s$^{-1}$) | 500,000 | 10,000 | 0,00 |
| - Temps de plateau (s) | 180,0 | 1260,0 | 0,0 |
| - Gradient de vitesse minimum 2 (s$^{-1}$) | 0,050 | 0,050 | 0,00 |
| - Temps de descente (s) | 60,0 | 30,0 | 0,0 |
| - Progression géométrique (G) linéaire (L) de D | L | | |
| - Correction de D par Krieger (O/N) | N | | |
| - Type de régression | | | |
| Incre (I) Moin. carrés (M) | | | |
| Autre (A) N | N | N | - |
| Choix (1, 2, 3, 4) | 1 | 1 | - |
| - Modèle de régression choisi | | | |
| Bingham (B) | | | |
| - Degré du polynôme d'interpolation (0 à 5) | 0 | 0 | - |
| - Lieu de la régression | | | |
| Courbe descendante (D) | | | |
| Montante (M) | D | D | |
| Points Hauts (H) bas (B) | B | B | |
| Point début régression (s$^{-1}$) | 0,0 | 0,0 | |
| Point fin régression (s$^{-1}$) | 1000,0 | 1000,0 | |

EP 0 967 187 B1

ANNEXE II

TABLEAU I

| | E/C = 0,34 | | | | | | | | | | | E/C = 0,38 | | |
|---|---|---|---|---|---|---|---|---|---|---|---|---|---|---|
| Stabilisant | 0 % A.V. | | | 0,005 % A.V. | | | 0,0075 % A.V. | | | 0,01 % A.V. | 0,02 % A.V. | 0,02 % A.V. | | |
| Température (°C) | 20 | 10 | 5 | 20 | 10 | 5 | 20 | 10 | 5 | 20 | 20 | 20 | 10 | 5 |
| Fluidité Marsh To (s) | 15 | 18 | 22 | 15 | 24 | 25 | 22 | 24 | 29 | 18 | 24 | 14 | n m | 17 |
| Fluidité Marsh 12 h (s) | 15 | 16 | 18 | 17 | 22 | 21 | 22 | 24 | 28 | 22 | 31 | 18 | n m | 24 |
| Exsudation 3 h (%) | 0,5 | 0 | 0 | < 0,5 | 0 | 0 | < 0,5 | 0 | 0 | 0 | 0 | 0 | n m | 0 |
| Observations (1) | | sed et rb | | | gel et rbj | | | | gel | gel - | gel + | | n m | gel ++ |
| Seuil Rhéomat To (Pa) | 0,4 | 0,4 | 0,4 | 1,1 | 1 | 1,1 | 2,4 | 1,8 | 1,5 | 2,5 | 5,2 | 2,5 | n m | 2,5 |
| Seuil Rhéomat 2h (Pa) | 0,8 | 3,6 | 4,4 | 2,5 | 6,1 | 8,6 | 5,7 | 11,6 | 15,5 | 6,5 | n m | 7 | n m | 21,2 |
| Temps filtration total (s) | 270 | 540 | 1 800 | 480 | 660 | 1 800 | 480 | 540 | 1 800 | 780 | 660 | 540 | n m | 1 800 |
| Filtrat total (ml) | 31 | 31,5 | 21 | 33 | 28 | 9 | 30,5 | 30,5 | 16 | 33 | 32 | 39 | n m | 28,2 |

(1) rbj : remontée blanche-jaunâtre, sed : sédimentation, rb : remontée blanchâtre.

n.m. : Non mesuré

**TABLEAU II**

| Coulis | E/C (1) | A.V. (%) | Exsu-dation 3h | flui-dité T0 | flui-dité T30 min | visco-sité Fann. Pa.s | seuil Fann Pa | filtrat 500 kPa à 300 s (ml) | Observations sur tubes inclinés |
|--------|---------|----------|----------------|--------------|-------------------|-----------------------|---------------|------------------------------|--------------------------------|
| 1 | 0,31 | 0 | 0 | 11,0 | 11,8 (T15 min.) | 0,2 | 0,7 | 11 | Arêtes de poisson sur génératrice supérieure. Bulles en tête de tube. |
| 2 | 0,34 | 0,005 | 0 | 12,2 | – | 0,25 | 4,8 | 11 | Très peu d'arêtes et petite bulle en tête de tube |
| 3 | 0,32 | 0,005 | 0 | 15,3 | 18,6 | 0,4 | 3,8 | 7,5 | Idem 1 avec défauts moins marqués |
| 4 | 0,35 | 0,02 | 0 | 16,1 | 19,1 | 0,6 | 18,9 | 6,5 | Pas de défauts |
| 5 | 0,36 | 0,02 | 0 | 13,6 | 18,2 | 0,35 | 10,3 | 7 | Pas de défauts |
| 6 | 0,37 | 0,02 | 0 | 12,2 | 14,0 | 0,3 | 8,1 | 8 | Pas de défauts |

L'eau du E/C correspond à l'ajout d'eau hors adjuvants.

EP 0 967 187 B1

**Revendications**

1. Coulis d'injection, notamment de précontrainte, comprenant au moins :

   - un ciment Portland de type CPA-CEM I ;
   - de l'eau ;
   - un adjuvant plastifiant et/ou superplastifiant ;
   - un agent de viscosité ;

   **caractérisé en ce que** le ciment présente une surface spécifique comprise entre 3000 et 3200 cm$^2$/g, et **en ce que** les doses d'adjuvant plastifiant et/ou superplastifiant, d'agent de viscosité et d'eau dudit coulis sont telles que le coulis présente, après première gélification, un seuil de cisaillement Fann au moins égal à 4 Pa à 20°C, et une viscosité Fann au moins égale à 0,3 Pa.s à 20°C, le coulis ne présentant pas de trace visible d'exsudation à l'essai au tube incliné après 24 heures.

2. Coulis d'injection selon la revendication 1 **caractérisé en ce que** le ciment présente un taux en poids de SO$_3$ total variant entre environ 1,5% et environ 2, 5%, par rapport au poids total du ciment.

3. Coulis selon la revendication 1 ou 2 **caractérisé en ce qu'**il présente un rapport E/C total variant entre environ 0,32 et environ 0,38.

4. Coulis d'injection selon l'une quelconque des revendications 1 à 3 **caractérisé en ce que** l'adjuvant plastifiant et/ou superplastifiant est choisi notamment parmi les produits à base de lignosulfonate, mélamine, naphtalène, polyacrylate, ainsi que les mélanges et/ou dérivés de ces produits.

5. Coulis selon l'une quelconque des revendications 1 à 4, **caractérisé en ce que** l'adjuvant plastifiant et/ou superplastifiant est présent en une quantité en poids variant entre environ 0,5% et environ 1,5%, exprimée en pourcentage d'extrait sec par rapport au poids total du ciment.

6. Coulis selon l'une quelconque des revendications 1 à 5, **caractérisé en ce que** l'adjuvant plastifiant est présent en une quantité en poids variant entre environ 0,02% et environ 0,2% , exprimée en pourcentage d'extrait sec par rapport au poids total du ciment.

7. Coulis selon l'une quelconque des revendications 1 à 6, **caractérisé en ce que** l'agent de viscosité est choisi parmi les produits à base de polysaccharide.

8. Coulis selon l'une quelconque des revendications 1 à 7, **caractérisé en ce que** l'agent de viscosité est à base de gomme xanthane, gomme de guar, gomme curdlan, ainsi que les dérivés et/ou mélanges de ces produits.

9. Coulis selon l'une quelconque des revendications 1 à 8, **caractérisé en ce que** l'agent de viscosité est à base de gomme welan, ainsi que les dérivés de ce produit.

10. Coulis selon l'une quelconque des revendications 1 à 9, **caractérisé en ce que** l'agent de viscosité est présent en une quantité en poids variant entre environ 0,005% et environ 0,05%, par rapport au poids total du ciment.

11. Coulis selon l'une quelconque des revendications 1 à 10, **caractérisé en ce que** l'agent de viscosité comprend les produits à base de cellulose, notamment méthyl-cellulose, hydroxy-ethyl-cellulose 90, ainsi que les mélanges et/ou dérivés de ces produits.

12. Coulis selon la revendication 11, **caractérisé en ce que** l'agent de viscosité est présent en une quantité en poids variant entre environ 0,02% et environ 0,5% par rapport au poids total du ciment.

13. Coulis selon l'une quelconque des revendications 1 à 12, **caractérisé en ce que** l'agent de viscosité comprend un mélange de produits à base de polysaccharide et de produits à base de cellulose.

14. Coulis d'injection selon l'une quelconque des revendications 1 à 13, **caractérisé en ce qu'**il comporte :

    - un ciment Portland de type CPA-CEM I, présentant une surface spécifique d'environ 3 100 cm$^2$/g et un taux

en poids de $SO_3$ total de 2,2% par rapport au poids total du ciment ;
- d'environ 0,5% à environ 1,5% d'un agent plastifiant de type naphtalène, exprimée en pourcentage d'extrait sec par rapport au poids total du ciment ;
- de l'eau.

**15.** Coulis selon la revendication 14, **caractérisé en ce qu'**il comprend environ 0,02% en poids de gomme welan par rapport au poids total du ciment et environ 0,8% en poids d'adjuvant plastifiant à base de naphtalène, exprimée en pourcentage d'extrait sec par rapport au poids total du ciment.

**16.** Utilisation d'un coulis selon l'une quelconque des revendications 1 à 15, pour le remplissage des cavités ménagées dans les structures telles que bâtiments, ouvrages d'art.

**17.** Utilisation du coulis selon la revendication 16, comme mortier de scellement ou coulis de précontrainte.

**18.** Kit destiné à la préparation d'un coulis d'injection selon l'une quelconque des revendications 1 à 15, pour le remplissage de cavités, comprenant :

- une première dose prédéfinie de ciment ;
- une seconde dose prédéfinie d'un mélange d'au moins un agent de viscosité et d'au moins un adjuvant plastifiant et/ou superplastifiant ;

**caractérisé en ce que** le poids de la seconde dose est adapté pour une utilisation avec la première dose, de sorte à obtenir un coulis qui présente, après première gélification, un seuil de cisaillement Fann au moins égal à 4 Pa à 20°C, et une viscosité Fann au moins égale à 0,3 Pa.s à 20°C, le coulis ne présentant pas de trace visible d'exsudation à l'essai au tube incliné après 24 heures.

**19.** Kit selon la revendication 18, **caractérisé en ce que** la seconde dose est conditionnée de façon séparée de la première dose.

**20.** Kit selon la revendication 19, **caractérisé en ce que** la seconde dose est conditionnée dans une enveloppe, par exemple, un sachet hydrosoluble.

**21.** Kit selon l'une quelconque des revendications 18 à 20, **caractérisé en ce que** la dose de ciment est d'environ 50 kg et la dose de mélange d'au moins un adjuvant plastifiant et/ou superplastifiant et d'au moins un agent de viscosité est d'environ 0,25 kg à environ 0,8 kg.

**22.** Procédé de vérification de la qualité d'un coulis d'injection, notamment de précontrainte, selon l'une quelconque des revendications 1 à 15, au regard des phénomènes d'exsudation, comprenant les étapes consistant à :

- mesurer le seuil de cisaillement Fann, après première gélification du coulis ;
- mesurer la viscosité Fann, après première gélification du coulis.

**23.** Procédé selon la revendication 22, **caractérisé en ce que** les mesures de viscosité et de seuil de cisaillement sont réalisées sur tube incliné.

**24.** Procédé d'obtention d'un coulis d'injection, notamment de précontrainte, dans lequel on mélange au moins :

- un ciment Portland de type CPA-CEM I ;
- de l'eau ;
- un adjuvant plastifiant et/ou superplastifiant ;
- un agent de viscosité ;

**caractérisé en ce qu'**on choisit un ciment dont la surface spécifique est comprise entre 3000 et 3200 cm$^2$/g, et **en ce que** les doses d'adjuvant plastifiant et/ou superptastifiant, d'agent de viscosité et d'eau sont choisies de sorte que le coulis présente, après première gélification, un seuil de cisaillement Fann au moins égal à 4 Pa à 20°C, et une viscosité Fann au moins égale à 0,3 Pa.s à 20°C, le coulis ne présentant pas de trace visible d'exsudation à l'essai au tube incliné après 24 heures.

**Patentansprüche**

1.  Einspritzmasse, insbesondere mechanische Vorspannungsmasse, mit wenigstens:

    -   einem Portlandzement vom Typ CPA-CEM I;

    -   Wasser;

    -   einem verflüssigenden und / oder superverflüssigenden Zusatzstoff;

    -   einem Viskositätswirkstoff;

    **dadurch gekennzeichnet, dass** der Zement eine spezifische, zwischen 3000 und 3200 cm$^2$/g inbegriffene Oberfläche aufweist und dass die Dosen des verflüssigenden und / oder superverflüssigenden Zusatzstoffs, des Viskositätswirkstoffs und des Wassers der genannten Masse derart sind, dass die Masse nach erster Eindickung eine Abscherstufe Fann von wenigstens gleich 4 Pa bei 20°C und eine Viskosität Fann von wenigstens gleich 0,3 Pa. s bei 20°C aufweist, wobei die Masse beim Versuch mit dem Schrägtubus nach 24 Stunden keine sichtbaren Ausschwitzspuren aufweist.

2.  Einspritzmasse gemäß Anspruch 1, **dadurch gekennzeichnet, dass** der Zement einen zwischen ungefähr 1,5 % und ungefähr 2,5 % variierenden Gewichtsgesamtprozentsatz an SO$_3$ im Verhältnis zum Gesamtgewicht des Zements aufweist.

3.  Masse gemäß Anspruch 1 oder 2, **dadurch gekennzeichnet, dass** sie ein zwischen ungefähr 0,32 und ungefähr 0,38 variierendes Gesamtverhältnis E/C aufweist.

4.  Einspritzmasse gemäß Anspruch 1 bis 3, **dadurch gekennzeichnet, dass** der verflüssigende und / oder superverflüssigende Zusatzstoff insbesondere aus den Produkten auf der Basis von Lignosulfat, Melamin, Naphthalin, Polyakrylat sowie aus den Mischungen und / oder Derivaten dieser Produkte ausgewählt ist.

5.  Masse gemäß Anspruch 1 bis 4, **dadurch gekennzeichnet, dass** der verflüssigende und / oder superverflüssigende Zusatzstoff in einer zwischen ungefähr 0,5 % und ungefähr 1,5 % variierenden Gewichtsmenge ausgedrückt in Prozent des Trockenextrakts im Verhältnis zum Gesamtgewicht des Zements vorhanden ist.

6.  Masse gemäß Anspruch 1 bis 5, **dadurch gekennzeichnet, dass** der verflüssigende Zusatzstoff in einer zwischen ungefähr 0,02 % und ungefähr 0,2 % variierenden Gewichtsmenge, ausgedrückt in Prozent des Trockenextrakts im Verhältnis zum Gesamtgewicht des Zements vorhanden ist.

7.  Masse gemäß Anspruch 1 bis 6, **dadurch gekennzeichnet, dass** der Viskositätswirkstoff aus den Produkten auf Polysaccharidbasis ausgewählt ist.

8.  Masse gemäß Anspruch 1 bis 7, **dadurch gekennzeichnet, dass** der Viskositätswirkstoff auf Xanthangummi, Guargummi, Curdlangummi, sowie auf den Derivaten und / oder Mischungen dieser Produkte basiert.

9.  Masse gemäß Anspruch 1 bis 8, **dadurch gekennzeichnet, dass** der Viskositätswirkstoff auf Welangummi sowie auf den Derivaten dieses Produkts basiert.

10. Masse gemäß Anspruch 1 bis 9, **dadurch gekennzeichnet, dass** der Viskositätswirkstoff in einer zwischen ungefähr 0,005% und ungefähr 0,05% im Verhältnis zum Gesamtgewicht des Zements variierenden Gewichtsmenge vorhanden ist.

11. Masse gemäß Anspruch 1 bis 10, **dadurch gekennzeichnet, dass** der Viskositätswirkstoff die Produkte auf Zellulosebasis umfasst, insbesondere Methylzellulose, Hydroxy-Ethylzellulose 90, sowie die Mischungen und / oder Derivate dieser Produkte.

12. Masse gemäß Anspruch 11, **dadurch gekennzeichnet, dass** der Viskositätswirkstoff in einer zwischen ungefähr 0,02 % und ungefähr 0,5 % im Verhältnis zum Gesamtgewicht des Zements variierenden Gewichtsmenge vorhanden ist.

13. Masse gemäß Anspruch 1 bis 12,**dadurch gekennzeichnet, dass** der Viskositätswirkstoff eine Mischung von Produkten auf Polysaccharidbasis und von Produkten auf Zellulosebasis umfasst.

14. Einspritzmasse gemäß Anspruch 1 bis 13, **dadurch gekennzeichnet, dass** sie Folgendes umfasst:

    - einen eine spezifische Oberfläche von ungefähr 3100 cm$^2$/g und einen Gesamtprozentsatz an $SO_3$ von 2,2 % im Verhältnis zum Gesamtgewicht des Zements aufweisenden Portlandzement vom Typ CPA-CEM I;

    - zwischen ungefähr 0,5 % bis ungefähr 1,5 % eines verflüssigenden Wirkstoffs vom Typ Naphthalin, ausgedrückt in Prozent an Trockenextrakt im Verhältnis zum Gesamtgewicht des Zements;

    - Wasser

15. Masse gemäß Anspruch 14, **dadurch gekennzeichnet, dass** sie ungefähr 0,02 Gewichtsprozent Welangummi im Verhältnis zum Gesamtgewicht des Zements und ungefähr 0,8 Gewichtsprozent an verflüssigendem Wirkstoff auf Naphthalinbasis umfasst, ausgedrückt in Prozent Trockenextrakt im Verhältnis zum Gesamtgewicht des Zements.

16. Einsatz einer Masse gemäß Anspruch 1 bis 15 für das Ausfüllen von in Strukturen, wie z. B. Gebäuden oder Kunstwerken, ausgesparten Aushöhlungen.

17. Einsatz der Masse gemäß Anspruch 16 als Versiegelungsmörtel oder mechanische Vorspannungsmasse.

18. Kit zur Zubereitung einer Einspritzmasse gemäß Anspruch 1 bis 15 zum Auffüllen von Aushöhlungen, mit:

    - einer vordefinierten Dosis Zement;

    - einer zweiten vordefinierten Dosis einer Mischung von wenigstens einem Viskositätswirkstoff und wenigstens einem verflüssigenden und / oder superverflüssigenden Zusatzstoff;

    **dadurch gekennzeichnet, dass** das Gewicht der zweiten Dosis für einen Einsatz mit der ersten Dosis derart angepasst ist, dass eine Masse erhalten wird, die nach erster Eindickung eine Abscherstufe Fann von wenigstens gleich 4 Pa bei 20°C und eine Viskosität Fann von wenigstens gleich 0,3 Pa.s bei 20°C aufweist, wobei die Masse beim Versuch mit dem Schrägtubus nach 24 Stunden keine sichtbaren Ausschwitzspuren aufweist.

19. Kit gemäß Anspruch 18, **dadurch gekennzeichnet, dass** die zweite Dosis separat von der ersten Dosis verpackt wird.

20. Kit gemäß Anspruch 19, **dadurch gekennzeichnet, dass** die zweite Dosis in einem Umschlag, zum Beispiel einer wasserlöslichen Tüte, verpackt wird.

21. Kit gemäß Anspruch 18 bis 20, **dadurch gekennzeichnet, dass** die Zementdosis ungefähr 50 kg und die Mischdosis aus wenigstens einem verflüssigenden und / oder superverflüssigenden Zusatzstoff und aus wenigstens einem Viskositätswirkstoff ungefähr 0,25 kg bis ungefähr 0,8 kg beträgt.

22. Prüfverfahren der Qualität einer Einspritzmasse, insbesondere mechanischen Vorspannungsmasse gemäß Anspruch 1 bis 15, das bezüglich der Ausschwitzphänomene die Stufen umfasst, bestehend aus:

    - Messen der Abscherstufe Fann nach erster Eindickung der Masse;

    - Messen der Viskosität Fann nach erster Eindickung der Masse.

23. Verfahren gemäß Anspruch 22, **dadurch gekennzeichnet, dass** die Viskositäts- und Abscherstufenmessungen auf dem Schrägtubus realisiert werden.

24. Verfahren zum Erhalt einer Einspritzmasse, insbesondere mechanischen Vorspannungsmasse, in dem wenigstens Folgendes miteinander vermischt wird:

**14**

- ein Portlandzement vom Typ CPA-CEM I;

- Wasser;

- ein verflüssigender und / oder superverflüssigender Zusatzstoff;

- ein Viskositätswirkstoff;

**dadurch gekennzeichnet, dass** ein Zement ausgewählt wird, dessen spezifische Oberfläche zwischen 3000 und 3200 $cm^2$/g inbegriffen ist und dass die Dosen des verflüssigenden und / oder superverflüssigenden Zusatzmittels, des Viskositätswirkstoffs und des Wassers derart ausgewählt werden, dass die Masse nach erster Eindickung eine Abscherstufe Fann von wenigstens gleich 4 Pa bei 20°C und eine Viskosität Fann von wenigstens gleich 0,3 Pa.s bei 20°C aufweist, wobei die Masse beim Versuch mit dem Schrägtubus nach 24 Stunden keine sichtbaren Ausschwitzspuren aufweist.

**Claims**

1. An injection grout, in particular for prestressing, comprising at least:

   - a Portland cement of the CPA-CEM I type;

   - water;

   - a plasticising and/or superplasticising adjuvant;

   - a viscosity agent;

   **characterised in that** the cement has a specific surface of between 3000 and 3200 $cm^2$/g, and **in that** the proportions of plasticising and/or superplasticising adjuvant, viscosity agent and water in the said grout are such that the grout has, after the first gelling, a Fann shear threshold of at least 4 Pa at 20°C and a Fann viscosity of at least 0.3 Pa.s at 20°C, the grout not exhibiting any visible trace of exudation under the inclined tube test after 24 hours.

2. An injection grout according to Claim 1, **characterised in that** the cement has a total level of $SO_3$ by weight varying between approximately 1.5% and approximately 2.5% with respect to the total weight of the cement.

3. A grout according to Claim 1 or 2, **characterised in that** it has a total W/C ratio varying between approximately 0.32 and approximately 0.38.

4. An injection grout according to any one of Claims 1 to 3, **characterised in that** the plasticising and/or superplasticising adjuvant is chosen in particular from amongst the products based on lignosulphonate, melamine, naphthalene and polyacrylate, as well as mixtures and/or derivatives of these products.

5. A grout according to any one of Claims 1 to 4, **characterised in that** the plasticising and/or superplasticising adjuvant is present in a quantity by weight varying between approximately 0.5% and approximately 1.5%, expressed as a percentage of dry extract with respect to the total weight of the cement.

6. A grout according to any one of Claims 1 to 5, **characterised in that** the plasticising adjuvant is present in a quantity by weight varying between approximately 0.02% and approximately 0.2%, expressed as a percentage of dry extract with respect to the total weight of the cement.

7. A grout according to any one of Claims 1 to 6, **characterised in that** the viscosity agent is chosen from amongst the products based on polysaccharide.

8. A grout according to any one of Claims 1 to 7, **characterised in that** the viscosity agent is based on xanthan gum, guar gum, curdlan gum or derivatives and/or mixtures of these products.

9. A grout according to any one of Claims 1 to 8, **characterised in that** the viscosity agent is based on welan gum or derivatives of this product.

10. A grout according to any one of Claims 1 to 9, **characterised in that** the viscosity agent is present in a quantity by weight varying between approximately 0.005% and approximately 0.05% with respect to the total weight of cement.

11. A grout according to any one of Claims 1 to 10, **characterised in that** the viscosity agent comprises products based on cellulose, in particular methyl cellulose, hydroxyethyl cellulose 90 or mixtures and/or derivatives of these products.

12. A grout according to Claim 11, **characterised in that** the viscosity agent is present in a quantity by weight varying between approximately 0.02% and approximately 0.5% with respect to the total weight of cement.

13. A grout according to any one of Claims 1 to 12, **characterised in that** the viscosity agent comprises a mixture of products based on polysaccharide and products based on cellulose.

14. An injection grout according to any one of Claims 1 to 13, **characterised in that** it comprises:

    - a Portland cement of the CPA-CEM I type, having a specific surface of approximately 3100 cm$^2$/g and a total SO$_3$ content by weight of 2.2% with respect to the total weight of cement;

    - approximately 0.5% to approximately 1.5% of a plasticising agent of the naphthalene type, expressed as a percentage of dry extract with respect to the total weight of cement;

    - water.

15. A grout according to Claim 14, **characterised in that** it comprises approximately 0.02% by weight welan gum with respect to the total weight of cement and approximately 0.8% by weight plasticising adjuvant based on naphthalene, expressed as a percentage of dry extract with respect to the total weight of cement.

16. Use of a grout according to any one of Claims 1 to 15 for filling cavities formed in structures such as buildings and civil engineering works.

17. Use of the grout according to Claim 16 as a bedding mortar or prestressing grout.

18. A kit intended for preparing an injection grout according to any one of Claims 1 to 15, for filling cavities, comprising:

    - a first predefined dose of cement;

    - a second predefined dose of a mixture of at least one viscosity agent and at least one plasticising and/or superplasticising adjuvant;

    **characterised in that** the weight of the second dose is adapted for use with the first dose, so as to obtain a grout which has, after first gelling, a Fann shear threshold of at least 4 Pa at 20°C and a Fann viscosity of at least 0.3 Pa.s at 20°C, the grout exhibiting no visible trace of exudation under an inclined tube test after 24 hours.

19. A kit according to Claim 18, **characterised in that** the second dose is packaged separately from the first dose.

20. A kit according to Claim 19, **characterised in that** the second dose is packaged in an envelope, for example a watersoluble sachet.

21. A kit according to any one of Claims 18 to 20, **characterised in that** the dose of cement is approximately 50 kg and the dose of a mixture of at least one plasticising and/or superplasticising adjuvant and at least one viscosity agent is approximately 0.25 kg to approximately 0.8 kg.

22. A method of verifying the quantity of an injection grout, in particular prestressing grout, according to any one of Claims 1 to 15, with regard to the phenomena of exudation, comprising the steps consisting of:

- measuring the Fann shear threshold, after first gelling of the grout;
- measuring the Fann viscosity, after first gelling of the grout.

23. A method according to Claim 22, **characterised in that** the viscosity and shear threshold measurements are carried out on an inclined tube.

24. A method of obtaining an injection grout, in particular a prestressing grout, in which there are mixed at least:

- a Portland cement of the CPA-CEM I type;

- water;

- a plasticising and/or superplasticising adjuvant;

- a viscosity agent;

**characterised in that** a cement is chosen whose specific surface is between 3000 and 3200 $cm^2$/g, and **in that** the doses of plasticising and/or superplasticising agent, viscosity agent and water are chosen so that the grout has, after first gelling, a fan shear threshold of at least 4 Pa at 20°C and a Fann viscosity of at least 0.3 Pa.s at 20°C, the grout exhibiting no visible trace of exudation under an inclined tube test after 24 hours.

FIG.1

FIG.2